Europäisches Patentamt

European Patent Office

Office européen des brevets

(19)

(11) **EP 1 229 516 A1**

(12) **EUROPEAN PATENT APPLICATION**

(43) Date of publication:
07.08.2002 Bulletin 2002/32

(51) Int Cl.[7]: **G10L 15/20**

(21) Application number: **01101813.2**

(22) Date of filing: **26.01.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Telefonaktiebolaget L M Ericsson (Publ)**
**126 25 Stockholm (SE)**

(72) Inventors:
• **Hirsch, Hans-Günter**
**90562 Heroldsberg (DE)**

• **Klisch, Rainer**
**90419 Nürnberg (DE)**
• **Springer, Volker**
**90429 Nürnberg (DE)**

(74) Representative: **Schmidt, Steffen J., Dipl.-Ing.**
**Wuesthoff & Wuesthoff,**
**Patent- und Rechtsanwälte,**
**Schweigerstrasse 2**
**81541 München (DE)**

(54) **Method, device, terminal and system for the automatic recognition of distorted speech data**

(57)    A method and a device for processing distorted short-term speech spectra for automatic speech recognition is described. The method comprises providing a set of reference speech spectra, determining the reference speech spectra of the set of references speech spectra which corresponds to the distorted short-term speech spectra, estimating a frequency response taking into account both the distorted short-term speech spectra and the corresponding reference speech spectra, and compensating the distorted short-term speech spectra based on the estimated frequency response.

Fig. 1

EP 1 229 516 A1

**Description**

Technical Field of the Invention

The invention relates to the field of automatic speech recognition and more particularly to a method and a device for processing distorted speech data for automatic speech recognition.

Discussion of the Prior Art

Automatic recognition of speech is becoming a technology which is used for controlling all types of electronic devices like mobile telephones or for obtaining access to services over a telecommunication network.

It has been found that a speech signal processed during automatic speech recognition may be corrupted on its way to an automatic speech recognizer by several types of noise. One of these is referred to as "additive" noise and corresponds to stationary background noise during recognition. Furthermore, the recognition is influenced by the frequency response of the transmission channel from the speaker to the audio input of the automatic speech recognizer. The term convolutional noise has been introduced for this type of distortion. In the following, the terms convolutional noise and "distortion" are used synonymously.

The influence of additive and convolutional noise can be approximately described in the linear spectral domain by

$$Y(t,f) = |H(f)|^2 \cdot S(t,f) + N(f).$$

where $Y(t,f)$ represents the short-term power density spectra of the distorted speech which are taken as input for the automatic speech recognizer, $H(f)$ is the unknown frequency response of the transmission channel, $S(t,f)$ are the short-term power density spectra of clean speech and $N(f)$ is the spectrum of the additive noise. It is usually assumed that $H(f)$ and $N(f)$ are almost constant or only slowly changing over time t.

In the following, the problems associated with the frequency response of the transmission channel are considered in more detail. It is self evident that recognition performance of an automatic speech recognizer degrades if changing transmission channels having different frequency responses are used. As an example, changing frequency responses may result from the use of different microphones (e.g. the internal microphone of a mobile terminal and the microphone of a hands-free equipment for this mobile terminal) or the transmission of speech over telephone lines having different frequency responses. In general, the problem of a degrading recognition performance is due to the fact that the training of the automatic speech recognizer is done using a first transmission channel (e.g. using the mobile terminal's internal microphone or using a first telephone line) and the automatic speech recognizer is then operated using a different transmission channel (e.g. using a hands-free equipment or a different telephone line).

Looking at the input spectrum of the automatic speech recognizer in the logarithmic spectral domain and neglecting for the moment the additive noise contribution $N(f)$, the above product of $H(f)$ and $S(t,f)$ becomes a sum:

$$\log[Y(t,f)] = \log[|H(f)|^2] + \log[S(t,f)]$$

It can thus be seen that in the logarithmic spectral domain the power density spectra $S(t,f)$ of the clean speech are shifted under the influence of the frequency response $H(f)$ by a constant offset. Existing technologies for compensating the influence of different frequency responses $H(f)$ try to remove this constant offset.

As an example, the compensation technology of Cepstral Mean Normalization (CMN) can be mentioned (Y. Gong: "Speech recognition in noisy environments: A survey", Speech Communication, Vol. 16, pp. 261 - 291, 1995). A possible implementation of the CMN technique estimates the mean of each cepstral value over an utterance. Then this mean is subtracted from the cepstral value in each frame, a frame describing a short sequence of speech data. The assumption made by this technique is that the average of the cepstral over the speech interval represents the channel distortion. The channel distortion is generally computed by a long-term cepstral average, which is not suitable for real-time applications. However, short-term cepstral average implementations have also been proposed. Short-term implementations assume that the channel distortion is varying slowly compared to the speech signal.

Other compensation techniques try to remove the constant offset by an adaptive filtering of the spectral envelopes of the actual utterance based on previous spectral values. A possible implementation of the compensation technique of adaptive filtering is described in L. Mauuray: "Blind equalization in the cepstral domain for robust telephone based speech recognition", Proc. of the Eusipco conference, Rhodes, Greece, pp. 359 - 362, 1998.

According to a third implementation of techniques for compensating the influence of changing frequency re-

EP 1 229 516 A1

sponses on the recognition performance, an estimate of the frequency response is used to adapt the reference models used in the pattern matching process of automatic speech recognition. Such an implementation is e.g. known from H. G. Hirsch: "Adaption of HMMs in the presence of additive and convolutional noise", IEEE workshop on automatic speech recognition and understanding, Santa Barbara, USA, pp. 412 - 419, 1997. Given an estimate of the frequency response, the parameters of Hidden Markov Models (HMM) used in the pattern matching process are adapted in accordance with the Parallel Model Combination (PMC) approach.

The techniques for compensating for the influence of changing frequency responses known in the prior art suffer from several drawbacks. As an example, the CMN technique can only be applied off-line, i.e. after the whole utterance has been spectrally analyzed. Because of this the recognition process can only be started at the end of the utterance since the speech spectra have to be buffered. This causes a considerable delay. Although the compensation technique of adaptive filtering can be performed on-line, this compensation technique also uses spectral information of the past to compensate for distortions in the actual utterance. Finally, the compensation technique of adapting the reference speech models based on an estimate of the frequency response cannot be easily applied in context with distributed speech recognition where the feature extraction is done in separate terminals and where the extracted features are then transmitted as data to a remote location for pattern matching.

There is, therefore, a need for a method and a device for processing distorted short-term speech spectra which allow to increase the performance of automatic speech recognition.

SUMMARY OF THE INVENTION

According to the invention, a method of processing distorted short-term speech spectra for automatic speech recognition is provided, the method comprising providing a set of reference speech spectra, determining the reference speech spectra of the set of reference speech spectra which correspond to the distorted short-term speech spectra, estimating a frequency response taking into account both the distorted short-term speech spectra and the corresponding reference speech spectra, and compensating the distorted short-term speech spectra based on the estimated frequency response.

A device according to the invention for processing distorted short-term speech spectra for automatic speech recognition comprises a database for reference speech spectra, a processing stage for determining the reference speech spectra corresponding to the distorted short-term speech spectra and for estimating a frequency response taking into account both the distorted short-term speech spectra and the corresponding reference speech spectra, and a compensation unit for compensating the distorted short-term speech spectra based on the estimated frequency response.

According to the invention, the expression "speech spectra" does not only comprise speech information in the spectral domain, but also speech information in any domain that can be derived from the spectral domain by a linear transformation. For example, the expression "speech spectra" also denotes speech information in the cepstral domain since it has been obtained from speech information in the spectral domain by means of a Discrete Cosine Transformation (DCT).

In the following, the expression "short-term" used in context with speech spectra denotes a period of time which corresponds to a typical frame length in automatic speech recognition, i.e. several milliseconds. The distorted short-term speech spectra are preferably processed sequentially. A sequence of speech spectra may contain all short-term speech spectra comprised within a single utterance which is to be analyzed by automatic speech recognition. However, for the purpose of estimating the frequency response not all short-term speech spectra comprised within an utterance have to be taken into account. In many cases it will be sufficient to base the estimation on e.g. every second speech spectrum comprised within a sequence of distorted short-term speech spectra. In the extreme case, the estimation of the frequency response may be performed using a single or only a few distorted short-term speech spectra as input.

The distorted speech spectra and the reference speech spectra employed in accordance with the invention can be provided and processed in various formats and various domains, e.g. the spectral (frequency) domain or any domain that can be derived from the spectral domain by a linear transformation like the cepstral domain. According to a preferred embodiment, the reference speech spectra are provided in the same domain in which the frequency response is estimated. Because of this estimating of the frequency response is facilitated because a conversion of the reference speech spectra from one domain into another becomes obsolete. For example, if the distorted speech spectra are the logarithmic power density spectra log [Y(t,f)] of an utterance and if the frequency response is estimated in the logarithmic spectral domain, the set of reference speech spectra may likewise be provided in the form of logarithmic power density spectra S(t,f) in the logarithmic spectral domain.

Alternatively, the reference speech spectra may also be provided in a domain which is different from the domain in which the frequency response is estimated. This allows to use speech spectra which have been generated for other purposes (e.g. model speech spectra generated for pattern matching) as reference speech spectra for estimating the frequency response. However, in this case a conversion of the reference speech spectra has to be performed prior to the estimation of the frequency response. As an example, when the estimation is done in the spectral domain and the reference speech spectra are provided in the cepstral domain, the reference speech spectra have to be converted into the spectral domain prior to their use in context with the estimation of the frequency response.

The compensation of the distorted short-term speech spectra preferably takes place in the spectral domain. However, in some cases it can be advantageous to perform the compensation in a domain which was derived from the spectral domain by a linear transformation especially when the reference speech spectra are not provided in the spectral domain.

The estimation of the frequency response becomes more accurate if it is based only on speech spectra which actually contain speech. For this purpose, the speech spectra may be analyzed by means of a speech/non-speech decision to determine if they contain speech with a high probability. If only these distorted speech spectra which actually contain speech are further processed in respect to determining corresponding reference speech spectra, estimating the frequency response and compensating the distorted speech spectra, recognition performance can be increased.

Preferably, the reference speech spectra are obtained from speech data subject to a known frequency response or subject to low distortion. If distorted speech data subject to a known frequency response are available, the set of reference speech spectra may be generated by compensating the distorted speech data based on the known frequency response. Speech data generated by means of high-end equipment and subject to low distortion may directly be converted to reference speech spectra without any compensation steps.

The set of reference speech spectra provided for the purpose of estimating the frequency response may e. g. be created solely for this purpose and may be pre-stored during production of the automatic speech recognizer in a separate database. Alternatively, speech spectra which have been generated for other purposes like pre-stored (e. g. in the case of speaker independent automatic speech recognition) or user-trained (e.g. in the case of speaker dependent automatic speech recognition) model speech spectra which constitute reference models for automatic speech recognition may further be used for the purpose of estimating the frequency response.

The frequency response is estimated taking the distorted short-term speech spectra and the corresponding reference speech spectra as input. Thus, prior to the estimation process, the reference speech spectra corresponding to the distorted short-term speech spectra have to be determined. This can be achieved in various ways. As a first example, the reference speech spectra corresponding to the distorted speech spectra can be determined by finding the reference speech spectra closest to the distorted speech data. This can be done by calculating the distance between a single distorted speech spectrum and every reference speech spectrum of the set of reference speech spectra. The reference speech spectrum having the smallest distance from the distorted speech spectrum is then determined as the reference speech spectrum corresponding to this distorted speech spectrum. The distance between a reference speech spectrum and a distorted speech spectrum can be calculated e.g. based on the mean square error.

If the set of reference speech spectra is constituted by the model speech spectra which builds the reference models used for automatic speech recognition, a second example for determining the reference speech spectra corresponding to the distorted speech spectra may consist in finding the one or more reference models which match a sequence of distorted speech spectra and by analyzing which distorted speech spectrum has been matched during pattern matching with which model speech spectrum. The matching model speech spectrum may then be determined as the reference speech spectrum which corresponds to this distorted speech spectrum.

According to a preferred embodiment, the reference speech spectra corresponding to the distorted speech spectra are determined after the distorted speech spectra have been compensated based on a previously estimated frequency response. It has been found that determining the matching reference speech spectra thus becomes more accurate. However, for the purpose of estimating the frequency response, the un-compensated, distorted speech spectra are used again.

After the reference speech spectra which correspond to the distorted speech spectra have been determined, the frequency response is estimated using both the distorted speech spectra and the corresponding reference speech spectra as input. Several possibilities exist for estimating the frequency response. According to a preferred embodiment, the frequency response is estimated based on the difference between the distorted speech spectra and the corresponding reference speech spectra. In the logarithmic spectral domain, the difference may be calculated simply by subtracting the logarithmic value of a distorted speech spectrum from the logarithmic value of the corresponding reference speech spectrum. If two or more distorted speech spectra are to be used as basis for estimating the frequency response, the frequency response may be calculated by averaging the differences over a plurality of distorted speech spectra and corresponding reference speech spectra. The averaging can be performed over a complete sequence of distorted speech spectra, i.e. a complete utterance.

Although the inventive concept may also be applied on-line, a sequence of distorted speech spectra is preferably compensated based on the frequency response estimated for a previous sequence of distorted speech spectra. Such a compensation technique is based on the assumption that the frequency response does not rapidly change from one sequence of distorted speech spectra to another, i.e. from one input utterance to the next one. In order to facilitate a compensation which is based on the frequency response estimated for a previous sequence of distorted speech data, a buffer for temporarily storing an estimated frequency response can be provided. The buffer is advantageously arranged between the processing stage and the compensation unit of the device for processing the distorted speech data.

To reduce the influence of possible erroneous estimations, a currently estimated frequency response can be used for updating a previously estimated frequency response. In other words: the frequency response estimated for a sequence of distorted speech spectra can be smoothed taking into account the frequency response estimated for a previous sequence of distorted speech data. The previously estimated frequency response may also be temporarily stored in the buffer mentioned above.

So far the invention was described in context with compensating for a frequency response in the distorted short-term speech data. Besides the compensation for the convolutional noise the invention also relates to the compensation for additive noise present in the distorted speech data. Preferably, the additive noise is compensated for prior to determining which reference speech spectra correspond to the distorted speech spectra. This means that the distorted input speech spectra are firstly subjected to a compensation of the additive noise and that the thus compensated speech spectra are subsequently used as a basis for determining the reference speech spectra, for estimating the frequency response and for compensating for the frequency response.

The method and device described above are preferably employed in the front-end part, e.g. in the speech analyzing stage, of an automatic speech recognition system. This means that at least the estimation of the frequency response and the compensation for the frequency response are performed during or immediately after feature extraction. The speech analyzing stage and a speech recognition stage of the automatic speech recognition system may be arranged within one and the same apparatus or within different apparatus. According to the preferred aspect of distributed speech recognition, the speech analyzing stage may be arranged on a terminal side of the distributed speech recognition system and the pattern matching may be performed in a central speech recognition stage of a network server of the distributed speech recognition system.

BRIEF DESCRIPTION OF THE DRAWINGS

Further advantages and details of the invention will become apparent upon studying the following detailed description of preferred embodiments of the invention and upon reference to the drawings in which:

Fig. 1    is a block diagram of a first embodiment of a device for processing distorted short-term speech spectra according to the invention;

Fig. 2    is a block diagram of a second embodiment of a device for processing distorted short-term speech spectra according to the invention; and

Fig. 3    is a schematic diagram of a distributed speech recognition system according to the invention.

DETAILED DESCRIPTION OF THE PREFERRED EMBODIMENTS

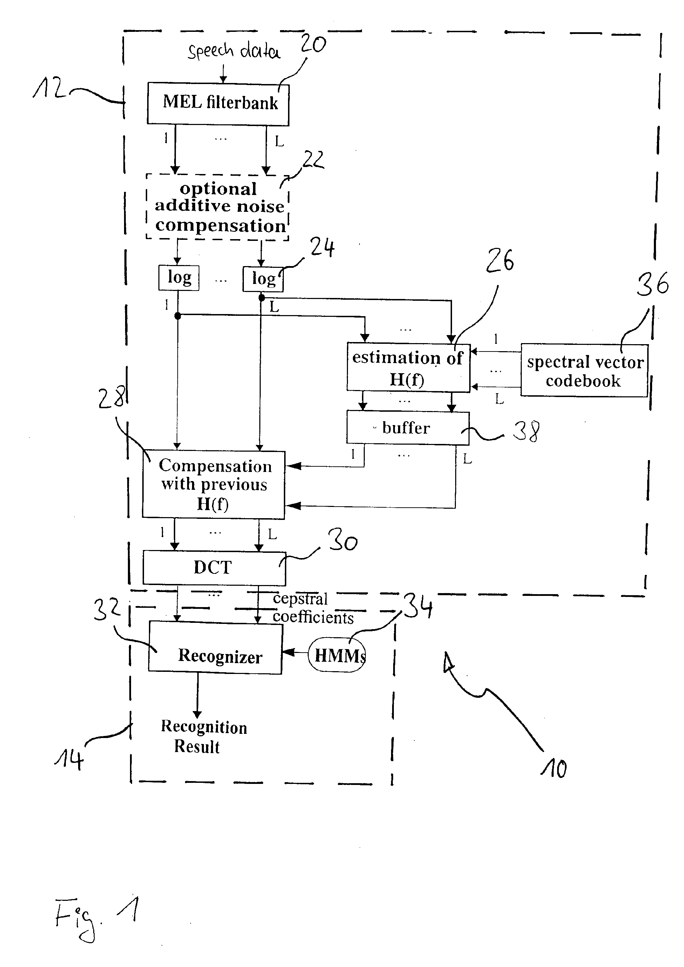

In Fig. 1 a first embodiment of a device 10 for processing distorted short-term speech spectra for automatic speech recognition is illustrated. The device 10 is part of a mobile terminal (e.g. a mobile telephone which is controllable by spoken utterances) and comprises both a speech analyzing stage 12 and a speech recognition stage 14. The device 10 depicted in Fig. 1 is constituted to process distorted speech spectra in the form of consecutive sequences, each sequence of distorted speech spectra corresponding to a single utterance.

The device 10 receives distorted speech data which were generated from an analog speech signal. In a first step, the analog speech signal was analog-to-digital converted at a sampling rate of 8 kHz. The resulting digitized speech signal was then subjected to framing in order to generate consecutive frames of speech data. The frame length is 25 milliseconds and the shift interval, i.e. the difference between the starting points of consecutive frames, is 80 samples. The framed speech data are then converted from the time domain into the linear spectral domain by means of a Fast Fourier Transform (FFT). Thus, the short-term speech spectra of the framed speech data are obtained. The components required to obtain the short-term speech spectra in the linear spectral domain are well known in the art and therefore not shown in Fig. 1.

As depicted in Fig. 1, the distorted short-term speech spectra which were converted into the linear spectral domain are first subjected to a short-term spectral analysis in the MEL frequency range in a MEL filterbank 20. In the MEL filterbank 20 the spectral band of the distorted short-term speech spectra is divided into L subbands or channels which are equidistant in the MEL spectral domain. Each subband has a triangular-shaped frequency window and consecutive subbands are half-overlapping. The number L of subbands lies typically in a range between 15 and 30.

Behind the MEL filterbank 20 the L subbands are processed in parallel. For the purpose of simplification, the steps following MEL filtering in the MEL filter bank 20 are exemplarily described for a single subband only.

The MEL filtered distorted speech spectra are fed into an optional additive noise compensation unit 22 which compensates for the influence of additive background noise like it exists in many environments, e.g. in a car. The additive noise compensation unit 22 thus removes the additive noise component present in the distorted speech spectra.

The additive noise compensation unit 22 further analyzes the distorted speech spectra received from the MEL filterbank 20 in order to make a speech/non-speech decision. By means of the speech/non-speech decision it can be ensured that only those distorted speech spectra are processed further which (with a high probability) contain speech. The speech/non-speech decision within the additive noise compensation unit 22 can be derived from the short-term speech energy of the distorted speech data. Prior to FFT, the speech energies of the distorted speech spectra may be calculated and the thus calculated speech energies may be compared within the additive noise compensation unit 22 with the estimated energy of the background noise. Distorted speech spectra are used for estimating the frequency response only if the respective speech energies lie at a predefined level over the estimated energy of the background noise.

After the additive noise components within the distorted short-term speech spectra have been removed and a speech/non-speech decision has been made, the distorted speech spectra are subjected to a conversion from the linear spectral domain into the logarithmic spectral domain by means of a non-linear transformation block 24.

Only the distorted speech spectra which actually contain speech are then fed into a processing stage comprising a single processing unit 26. Concurrently, all distorted speech spectra are fed into a compensation unit 28 of the device 10. In the compensation unit 28 the distorted speech spectra are compensated based on a frequency response estimated in the processing unit 26 on the basis of a previous sequence of distorted short-term speech data.

After the compensation unit 28 compensated for the distortion, the compensated short-term speech spectra are subjected to a Discrete Cosine Transformation (DCT) in a DCT transformation block 30. In the DCT transformation block 30 the cepstral coefficients of the compensated short-term speech spectra are calculated. In other words: the short-term speech spectra are transformed from the logarithmic spectral domain into the cepstral domain or cepstrum.

The pattern matching which allows to find one or more reference models corresponding to the sequence of short-term speech spectra output by the DCT transformation block 30 is done in a pattern matching unit 32. The pattern matching unit 32 is configured as a Viterbi recognizer. Albernatively, the pattern matching unit 32 may be a neuronal network.

An utterance is recognized within the pattern matching unit 32 using reference models like HMMs contained in a reference model database 34. By means of Viterbi alignment a single sequence of short-term speech spectra is matched in the cepstral domain with the states of each HMM in order to find the one or a sequence of HMMs which best match the sequence of short-term speech spectra. The corresponding HMMs are subsequently output as recognition result as indicated in Fig. 1.

In the following, the process of estimating the frequency response is described in more detail with reference to the processing unit 26, a database 36 and a buffer 38 of the device 10 depicted in Fig. 1.

As previously mentioned, the output of the non-linear transformation block 24 is not only input into the compensation unit 28 but is concurrently input into the processing unit 26. The database 36 is constituted as a spectral vector codebook and contains a set of reference speech data.

Upon receipt of the distorted speech spectra from the non-linear transformation block 24, the processing unit 26 determines separately for each subband the reference speech spectra corresponding to the distorted speech data. This is done by finding for every distorted speech spectrum the corresponding reference speech spectrum which is closest to the distorted speech spectrum. For the purpose of finding a corresponding reference speech spectrum for a distorted speech spectrum, the distorted speech spectrum is first compensated based on a previously estimated frequency response and the corresponding reference speech spectrum is then determined based on the compensated speech spectrum. The reference speech spectra closest to a specific compensated speech spectrum can e.g. be found by means of vectra algebra well known in the prior art. As an example, the closest reference speech spectra may be determined by calculating the mean square error over the whole MEL spectrum.

The database 36 has a typical size of 32, 64 or 128 entries. In the case of a MEL filterbank 20 with 24 subbands (L = 24) and quantizing each speech spectrum with one byte, the database 36 having e.g. 64 entries would require 1.536 bytes of memory. The reference speech spectra contained in the database 36 were obtained from speech spectra which was processed up to the non-linear transformation block 24 as outlined above with reference to the distorted speech data. However, the equipment used for generating the reference speech spectra was chosen such that the reference speech spectra were only subject to as low a distortion as possible. Therefore, the thus generated reference speech spectra can be considered as "clean" speech spectra.

After the processing unit 26 has determined the reference speech spectra corresponding to the distorted speech spectra it estimates the frequency response of the current transmission channel. The frequency response is estimated in the logarithmic domain according to

$$\log[|H(f)|^2] = \frac{1}{T} \sum_t \{\log[Y(t,f)] - \log[S(t,f)]\}$$

where Y(t,f) stands for the distorted short-term speech spectra and S(t,f) stands for the corresponding reference speech spectra determined by the processing unit 26. The sum over t represents the accumulation of spectral differences between the distorted speech spectra and the corresponding reference speech data. The factor 1/T serves for averaging or normalization to the length of the sequence of distorted speech spectra respectively the number of distorted speech spectra taken into account. During the averaging or normalization only those speech spectra are taken into account which contain speech with a high probability.

As has become apparent from the above, the frequency response H(f) is estimated taking into account the distorted speech spectra comprised within a sequence of distorted speech spectra of a single utterance. The frequency response estimated for a sequence of distorted speech spectra is transferred from the processing unit 26 into the buffer 38 where it is temporarily stored until a following sequence of distorted speech spectra corresponding to the next utterance is fed into the compensating unit 28. In the compensation unit 28 a current sequence of distorted speech spectra is then compensated using the frequency response stored within the buffer 38 and relating to a previous sequence of distorted speech spectra.

The compensating for the frequency response within the compensation unit 28 is done in the logarithmic spectral domain by subtracting the frequency response estimated for a previous sequence of speech spectra from the distorted speech spectra of a current sequence of distorted speech spectra in accordance with

$$\log[S_{i+1}(t,f)] = \log[Y_{i+1}(t,f)] - \log[|H_i(f)|^2]$$

where (i+1) denotes the (i+1)th frame of distorted speech spectra and i stands for the previously estimated frequency response.

To reduce the influence of possible erroneous estimations the estimated frequency response may be smoothed by recursively updating a previously estimated frequency response in accordance with

$$\log[|H_i(f)|^2] = \alpha \cdot \log[|H_{i-1}(f)|^2] + (1-\alpha) \cdot \log[|H_i(f)|^2]$$

where $\alpha$ is a factor less but close to 1, i denotes the currently estimated frequency response and (i-1) denotes the previously estimated frequency response. The smoothing of the frequency response is preferably performed in the processing unit 26.

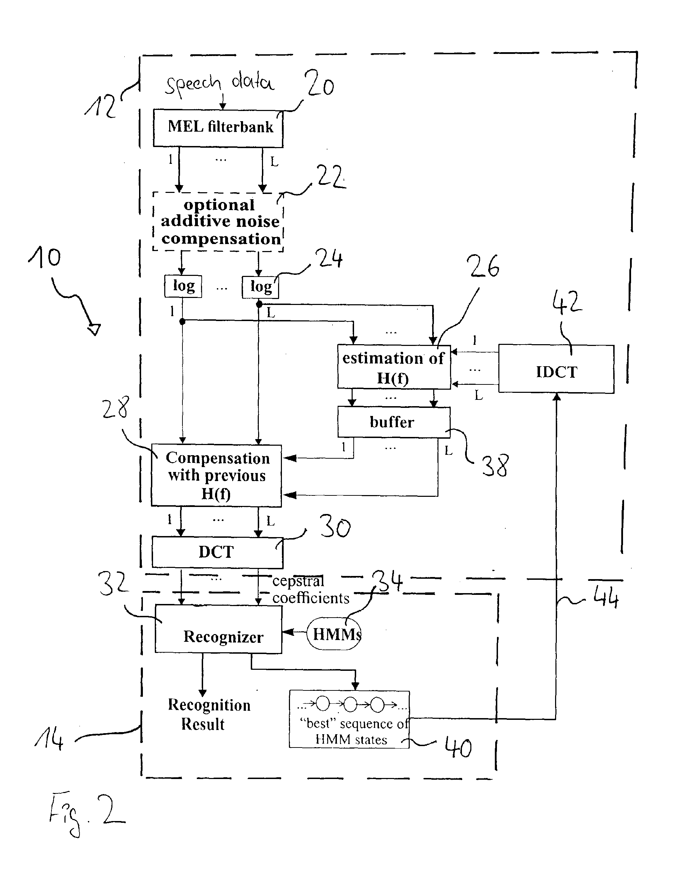

In Fig. 2, a second embodiment of a device 10 for processing distorted short-term speech spectra for automatic speech recognition is illustrated. Since the device 10 according to the second embodiment has some similarities with the device of a first embodiment, corresponding elements have been denoted with the same reference signs.

The device 10 according to the second embodiment deviates from the device of the first embodiment in that a different set of reference speech spectra is used and in that there is an additional link 44 between the speech recognition stage 14 and the speech analyzing stage 12.

According to the second embodiment depicted in Fig. 2, the frequency response is estimated using the spectral information which is contained in the reference models (HMM) of the automatic speech recognition system. Thus, the database 34 containing the user-trained or pre-defined HMMs is simultaneously used as database for reference speech spectra. This means that the set of reference speech spectra is constituted by the model speech spectra from which the HMMs within the database 34 are built.

According to the second embodiment, the reference speech spectra corresponding to the distorted speech spectra are determined as follows.

After having recognized an utterance in the pattern matching unit 32, the matching in the Viterbi alignment is used to define the "best" sequence of HMM states which represents the input speech data. It is thus analyzed which speech spectra input into the pattern matching unit 32 has been matched to which state of an individual HMM. This is done in the cepstral domain by means of the analyzing unit 40 which communicates with the pattern matching unit 32. The cepstral parameters of the matching HMM state are then fed from the analyzing unit 40 into an IDCT unit 42 which performs an inverse Discrete Cosine Transformation (IDCT). Thus, the reference speech spectra are converted from the cepstral domain into the logarithmic spectral domain and can be readily used by the processing unit 26 for estimating the frequency response. The processing unit 26 and the analyzing unit 40 constitute together a processing stage of the device 10 depicted in Fig. 2.

The frequency response is estimated in the processing unit 26 based on the reference speech spectra received from the IDCT unit 42 and the corresponding distorted speech spectra in the logarithmic spectral domain. Again, only those speech spectra are considered which contain speech with a high probability. It is necessary to temporarily store the distorted speech spectra, for which the reference speech spectra are determined in the analyzing unit 40, in the processing unit 26 until the corresponding reference speech spectra are received by the processing unit 26 from the IDCT unit 42. This procedure is applied to the whole utterance and averaging is subsequently performed over all short-term estimates. The estimated frequency response is then used to compensate the next sequence of distorted speech spectra as outlined above with respect to the first embodiment.

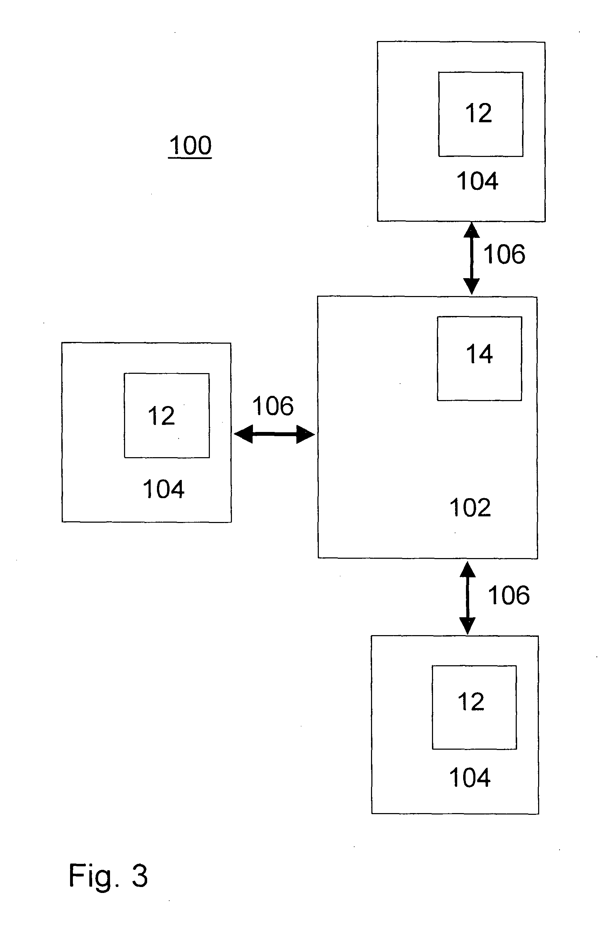

In Fig. 3, an embodiment of a Distributed Speech Recognition system (DSR) 100 according to the invention is illustrated. The DSR 100 comprises a network server 102 which communicates with a plurality of terminals 104 via wired or non-wired communication links 106. The terminals 104 can be configured as mobile telephones or conventional wired telephones.

Each terminal 104 comprises a speech analyzing stage 12 as described above with reference to Figs. 1 and 2. A corresponding speech recognition stage 14 in accordance with Figs. 1 and 2 is located within the network server 102. The distorted short-term speech spectra are processed within the speech analyzing stages 12 of the terminals 104 up to the generation of the cepstral coefficients. Cepstral coefficients are then decoded within the terminals 104 and transmitted via the communication links 106 to the network server 102. The network server 102 decodes the received cepstral coefficients. Based on the decoded cepstral coefficients pattern matching is performed within the speech recognition stage 14 of the network server 102. Thus, a recognition result is obtained.

If the DSR 100 depicted in Fig. 3 comprises the speech analyzing stage 12 and the speech recognition stage 14 depicted in Fig. 2, the communication links 106 have to be configured such that the cepstral reference speech spectra determined by the speech recognition stage 14 can be transmitted back to the terminals 104 where the IDCT transformation is performed.

Although the invention has been described with reference to Fig. 3 for a distributed speech recognition system, the devices 10 depicted in Figs. 1 and 2 may also be arranged in a conventional automatic speech recognition system where the speech analyzing stage 12 and the speech recognition stage 14 are positioned at the same location.

**Claims**

1. A method of processing distorted short-term speech spectra for automatic speech recognition, comprising

   a) providing a set of reference speech spectra;
   b) determining the reference speech spectra which correspond to the distorted short-term speech spectra;
   c) estimating a frequency response taking into account both the distorted short-term speech spectra and the corresponding reference speech spectra;
   d) compensating the distorted short-term speech spectra based on the estimated frequency response.

2. The method according to claim 1,
   further comprising analyzing the distorted speech spectra by means of a speech/non-speech-decision and performing steps b), c) and d) of claim 1 only with respect to the distorted speech spectra which contain speech.

3. The method according to claim 1 or 2,
   wherein the distorted speech spectra are compensated in the spectral domain or any domain that can be derived from the spectral domain by a linear transformation.

4. The method according to one of claims 1 to 3,
   wherein the set of reference speech spectra is obtained from speech data subject to a known frequency response or subject to low distortion.

5. The method according to one of claims 1 to 4,
   wherein the reference speech spectra corresponding to the distorted speech spectra are determined by finding the reference speech spectra closest to the distorted speech spectra.

6. The method according to one of claims 1 to 4,
   wherein the set of reference speech spectra is constituted by model speech spectra from which reference models for automatic speech recognition are built.

**7.** The method according to claim 6,
wherein the reference speech spectra corresponding to the distorted speech spectra are determined by finding the one or more reference models matching a sequence of distorted speech spectra and by analyzing which model speech spectra matches the distorted speech spectra.

**8.** The method according to one of claims 1 to 7,
wherein for the purpose of determining the reference speech spectra corresponding to the distorted speech spectra the distorted speech spectra are compensated based on a previously estimated frequency response.

**9.** The method according to one of claims 1 to 8,
wherein the frequency response is estimated based on the difference between the distorted speech spectra and the corresponding reference speech spectra.

**10.** The method according to claim 9,
wherein the frequency response is estimated by averaging the differences over a plurality of distorted short-term speech spectra and the corresponding reference speech spectra.

**11.** The method according to one of claims 1 to 10,
wherein a sequence of distorted speech spectra is compensated based on the frequency response estimated for a previous sequence of distorted speech spectra.

**12.** The method according to one of claims 1 to 11,
further comprising smoothing the frequency response estimated for a sequence of distorted speech spectra taking into account the frequency response estimated for a previous sequence of distorted speech spectra.

**13.** The method according to one of claims 1 to 12,
further comprising compensating for additive noise in the distorted speech spectra prior to determining the reference speech spectra.

**14.** A device (10) for processing distorted short-term speech data for automatic speech recognition, comprising

- a database (34, 36) for reference speech spectra;
- a processing stage (26, 40) for determining the reference speech spectra corresponding to the distorted short-term speech spectra and for estimating a frequency response taking into account both the distorted short-term speech spectra and the corresponding reference speech spectra;
- a compensation unit (28) for compensating the distorted short-term speech spectra based on the estimated frequency response.

**15.** The device according to claim 14,
further comprising a buffer (38) for temporarily storing the estimated frequency response.

**16.** A terminal (104) comprising a speech analyzing stage (12) with

- a database (34, 36) for reference speech spectra;
- a processing stage (26) for determining the reference speech spectra corresponding to the distorted short-term speech spectra and for estimating a frequency response taking into account both the distorted short-term speech spectra and the corresponding reference speech spectra;
- a compensation unit (28) for compensating the distorted short-term speech spectra based on the estimated frequency response.

**17.** A distributed speech recognition system (100) comprising at least one terminal (104) according to claim 16 and a network server (102) with a central speech recognition stage (14).

speech data

**MEL filterbank** 20

12

I ... L

**optional additive noise compensation** 22

**log** ... **log** 24

I L

**estimation of H(f)** 26

**spectral vector codebook** 36

I ... L

**buffer** 38

28

**Compensation with previous H(f)**

I ... L

**DCT** 30

... cepstral coefficients

32 34

**Recognizer** ← **HMMs**

**Recognition Result**

14

10

Fig. 1

EP 1 229 516 A1

speech data

**MEL filterbank** — 20

12

1 ... L

**optional additive noise compensation** — 22

10

log ... log — 24

1 ... L

26 — **estimation of H(f)**

42 — **IDCT**

1 ... L

**buffer** — 38

28 — **Compensation with previous H(f)**

1 ... L

**DCT** — 30

cepstral coefficients

32 — **Recognizer** ← **HMMs** — 34

44

**Recognition Result**

14

"best" sequence of HMM states — 40

Fig. 2

11

100

Fig. 3

EP 1 229 516 A1

| | | European Patent Office | EUROPEAN SEARCH REPORT | Application Number EP 01 10 1813 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | HIRSCH H -G: "Adaptation of HMMS in the presence of additive and convolutional noise" 1997 IEEE WORKSHOP ON AUTOMATIC SPEECH RECOGNITION AND UNDERSTANDING PROCEEDINGS (CAT. NO.97TH8241), 1997 IEEE WORKSHOP ON AUTOMATIC SPEECH RECOGNITION AND UNDERSTANDING PROCEEDINGS, SANTA BARBARA, CA, USA, 14-17 DEC. 1997, pages 412-419, XP002162296 1997, New York, NY, USA, IEEE, USA ISBN: 0-7803-3698-4 | 1-12, 14-17 | G10L15/20 |
| Y | * paragraphs '0001!,'0003!; figure 1 * | 13 | |
| Y | US 5 732 388 A (HAUENSTEIN ALFRED ET AL) 24 March 1998 (1998-03-24) * column 3, line 25 - line 42; figure 1 * | 13 | |
| X | DE 25 06 771 A (PHILIPS PATENTVERWALTUNG) 19 August 1976 (1976-08-19) * claim 1 * | 1,14,16, 17 | TECHNICAL FIELDS SEARCHED (Int.Cl.7) |
| A | HAN J ET AL: "Robust telephone speech recognition based on channel compensation" PATTERN RECOGNITION,US,PERGAMON PRESS INC. ELMSFORD, N.Y, vol. 32, no. 6, June 1999 (1999-06), pages 1061-1067, XP004164756 ISSN: 0031-3203 * paragraph '02.2! - paragraph '02.4! * | 1,14,16, 17 | G10L |

-/--

The present search report has been drawn up for all claims

| Place of search MUNICH | Date of completion of the search 7 March 2001 | Examiner De Vos, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

13

**European Patent Office**

**EUROPEAN SEARCH REPORT**

Application Number

EP 01 10 1813

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | REYNOLDS D A: "Experimental evaluation of features for robust speaker identification" IEEE TRANSACTIONS ON SPEECH AND AUDIO PROCESSING, OCT. 1994, USA, vol. 2, no. 4, pages 639-643, XP002162297 ISSN: 1063-6676 * paragraph 'III.B! * | 1,14,16, 17 | |
| A | EP 0 660 300 A (NIPPON ELECTRIC CO) 28 June 1995 (1995-06-28) * page 3, line 9 - line 16 * * claims 1-4 * | 1-17 | |

TECHNICAL FIELDS SEARCHED (Int.Cl.7)

The present search report has been drawn up for all claims

| Place of search | Date of completion of the search | Examiner |
|---|---|---|
| MUNICH | 7 March 2001 | De Vos, L |

EPO FORM 1503 03.82 (P04C01)

**ANNEX TO THE EUROPEAN SEARCH REPORT
ON EUROPEAN PATENT APPLICATION NO.** EP 01 10 1813

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2001

| Patent document cited in search report | | Publication date | Patent family member(s) | | Publication date |
|---|---|---|---|---|---|
| US 5732388 | A | 24-03-1998 | DE | 19500494 A | 18-07-1996 |
| DE 2506771 | A | 19-08-1976 | NONE | | |
| EP 0660300 | A | 28-06-1995 | JP | 2737624 B | 08-04-1998 |
| | | | JP | 7191689 A | 28-07-1995 |
| | | | DE | 69423588 D | 27-04-2000 |
| | | | DE | 69423588 T | 16-11-2000 |
| | | | ES | 2144031 T | 01-06-2000 |
| | | | US | 5655057 A | 05-08-1997 |

EPO FORM P0459

For more details about this annex : see Official Journal of the European Patent Office, No. 12/82